# EUROPEAN PATENT APPLICATION

(11) **EP 2 309 394 A2**
(43) Date of publication of application: **13.04.2011**
(21) Application number: 10187024.4
(22) Date of filing: 08.10.2010
(51) Int. Cl.: G06F 12/08

(54) **Processor and control method**

(30) Priority: 08.10.2009 JP 2009234391
(71) Applicant: FUJITSU LIMITED, Kawasaki-shi, Kanagawa 211-8588 (JP)
(72) Inventor: Toh, Ryotaro, Kawasaki-shi Kanagawa 211-8588 (JP); Kojima, Hiroyuki, Kawasaki-shi Kanagawa 211-8588 (JP)
(74) Representative: Fenlon, Christine Lesley

(57) **Abstract**

A processor includes a first processing unit that has a first memory and performs processing, a second processing unit that performs processing, a second memory that holds status information specifying a status of data held in the first memory, and a control unit that outputs a request for reading out the data of the first address to the first processing unit upon receiving a first access request for data of a first address from the second processing unit when first status information of the data of the first address indicates that the data of the first address is held in the first memory in an exclusive state or an owned state and that allows the second processing unit to access data of the first address included at the second memory upon receiving a no-data-modification notification indicating the data of the first address is not modified by the first processing unit.

## Description

### FIELD

The embodiments discussed herein are related to a processor and a control method.

### BACKGROUND

In recent years, central processing unit (CPU) have been used as a processor mounting pluralities of processing units combining execution units and L1 cache memories (level 1 cache memories: primary cache memories), that is, processor cores. Such CPU are called "multicore processors". By increasing the number of processor cores mounted, the processing speed of multicore processors as a whole is improved.

On the other hand, in multicore processors, sometimes a plurality of processor cores will simultaneously try to execute processing on the same data and store the processing results in the memory. If the processor cores simultaneously execute different processing on the same data, mismatch of data will occur. For this reason, when any processor core changes data, an operation is performed to suppress changes to the data by the other processor cores and reflect the changed data to the other processor cores. Such "cache coherency" for preventing mismatch of data held by the processor cores is becoming important.

Cache coherency has to be maintained between the L1 cache memories held by the plurality of processor cores and the L2 cache (level 2 cache memory: secondary cache memory) including all of the data held by the L1 cache memories.

As the protocol used in the cache memories and main memory to maintain the cache coherency, there is, for example, the MESI protocol. According to the MESI protocol, a cache memory is able to be set with one of four types of status information of "M (Modified)", "E (Exclusive)", "S (Shared)", "I (Invalidated)" for each line. By being set with status information, which processor core has the latest data becomes clear. Further, the status information of each cache itself is changed to enable the latest data to be acquired when requested by each processor core.

While not multicore processors, in the past a system controller (SC) controlling a plurality of CPUs has been known. Further, this system controller has a main memory and operates as a memory controller supplying the main memory with memory control signals. The system controller performs control for "cache coherency" between the cache memories of the plurality of CPUs connected to the system controller and the main memory of the system controller.

The system controller confirms the status of data covered by a read request when receiving a read request from a certain CPU. When the status of the data covered by the read request is the "S" (shared) state, the system controller does not perform a read operation for reading out the "S" state data at the other CPUs, but performs processing supplying the data concerned held in the main memory of the system controller to the CPU originating the read request. Since the system controller does not perform a read operation for reading out the "S" state data at the other CPUs, it is possible to reduce unnecessary data transfer operations between the CPUs and system controller.

[Patent Document 1] Japanese Laid-open Patent Publication No. H09-22383

### SUMMARY

According to an aspect of the embodiments, a processor includes a first processing unit that has a first memory and performs processing, a second processing unit that performs processing, a second memory that holds status information specifying a status of data held in the first memory, and a control unit that outputs a request for reading out the data of the first address to the first processing unit upon receiving a first access request for data of a first address from the second processing unit when first status information of the data of the first address indicates that the data of the first address is held in the first memory in an exclusive state or an owned state and that allows the second processing unit to access data of the first address included at the second memory upon receiving a no-data-modification notification indicating the data of the first address is not modified by the first processing unit.

### BRIEF DESCRIPTION OF DRAWINGS

The embodiments will become clearer from the following description of the preferred embodiments given with reference to the attached drawings, wherein:
FIG. 1 is a block diagram illustrating an example of the configuration of a processor;
FIG. 2 is a block diagram illustrating an example of processor cores;
FIG. 3 is a diagram illustrating an example of the change of state of status information of an L1 cache;
FIG. 4 is a table illustrating one example of a relationship between signals transmitted between a processor core and an L2 cache controller and status information;
FIG. 5 is a block diagram illustrating an example of an L1 cache RAM;
FIG. 6 is a diagram illustrating one example of a data structure of a tag RAM of an L1 cache and a data structure of a TLB;
FIG. 7 is a block diagram illustrating one example of an L2 cache RAM;
FIG. 8 is a diagram illustrating one example of the data structure of a tag RAM of an L2 cache;
FIG. 9 is a diagram illustrating one example of the change of state of status information of the L2 cache;
FIG. 10 is a block diagram illustrating one example of a core data request control unit;
FIG. 11 is a block diagram illustrating a first embodiment of a core data response control unit;
FIG. 12 is a block diagram illustrating a second embodiment of a core data response control unit;
FIG. 13 is a block diagram illustrating one example of a multiplexing and transfer circuit;
FIG. 14 is a diagram illustrating one example of the layout positions of the different functional units of a processor;
FIG. 15A is a flow chart of one example of data processing by the processor;
FIG. 15B is a flow chart of one example of data processing by the processor; and
FIG. 15C is a flow chart of one example of data processing by the processor.

### DESCRIPTION OF EMBODIMENTS

As described previously, when there is a read request for "E" state (exclusive) data from a CPU, a system controller requests a read operation to the CPU exclusively holding the "E" state data. Further, the system controller supplies the read "E" state data to the CPU making the request.

Accordingly, it is an object in one aspect of the embodiment to provide a processor that eliminate unnecessary data transfer operations from an L1 cache of a requesting processing unit to an L2 cache.

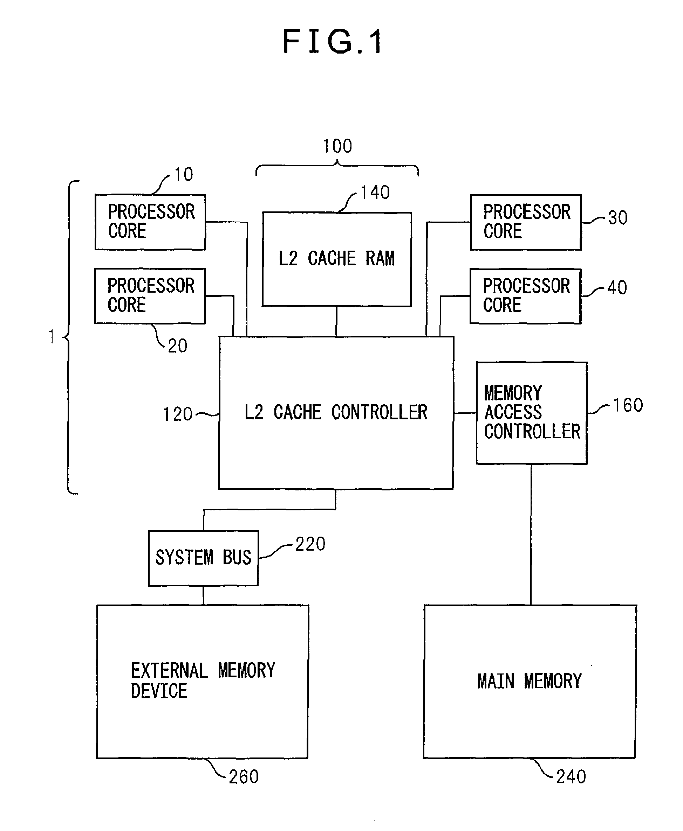

Below, an embodiment of the processor will be explained with reference to the drawings. FIG. 1 is a block diagram illustrating an example of the configuration of a processor. The processor 1 illustrated in FIG. 1 has processor cores 10 to 40, an L2 cache controller 120 for controlling the L2 cache proper, the L2 cache proper, that is, an L2 cache RAM (Random Access Memory) 140, and a memory access control unit 160. The processor 1 is connected through a system bus 220 to a main memory 240 and external memory device 260. The L2 cache controller 120 and the L2 cache RAM 140 are referred to together as the "L2 cache 100".

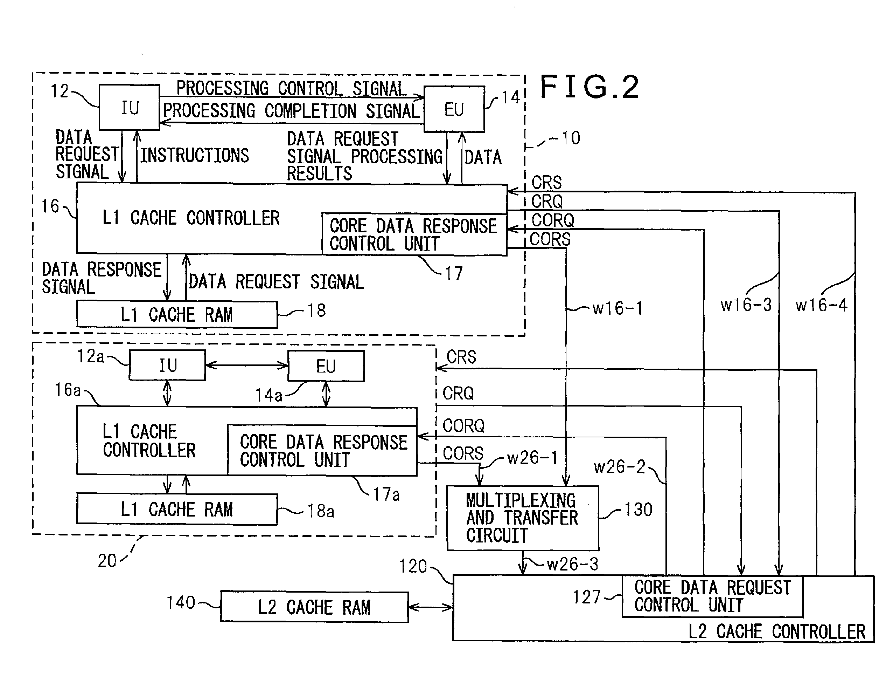

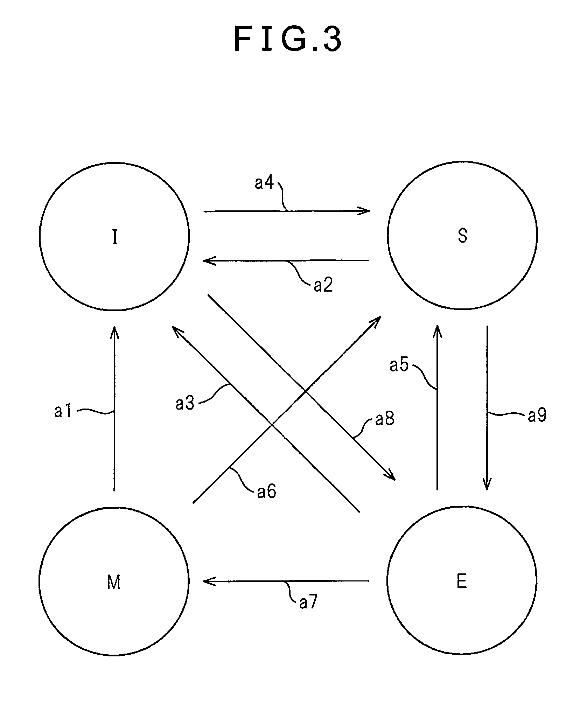

Each of the processor cores 10 to 40 has an instruction unit, an execution unit, an L1 cache controller, and an L1 cache RAM. The processor cores 10 to 40 read out instructions from the L1 cache RAMs and execute the instructions. An example of the processor cores 10 to 40 will be explained later using FIG. 2. Each L1 cache controller accesses data stored in the L1 cache RAM in accordance with the MESI protocol. The operation of an L1 cache controller in accordance with the MESI protocol will be explained later using FIG. 3.

The L2 cache controller 120 makes read (load) requests or write (store) requests for data to the L1 cache RAMs and main memory 240 or loads or stores data to the L2 cache RAM 140. The L2 cache controller 120 loads or stores data in accordance with the MESI protocol so as to maintain coherency between the data stored in the L1 cache memories or main memory 240 and the data held in the L2 cache.

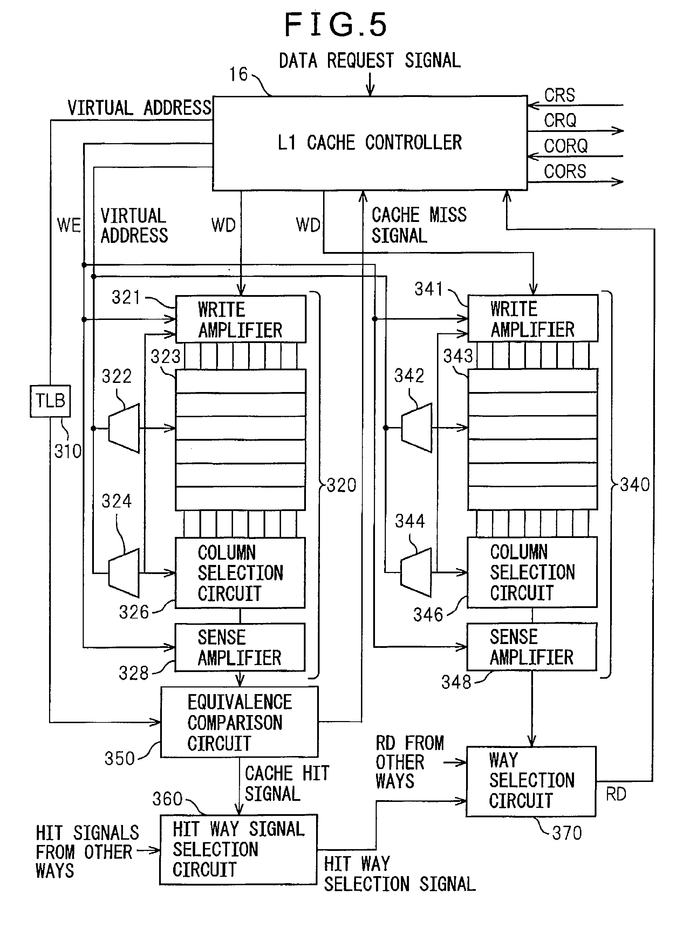

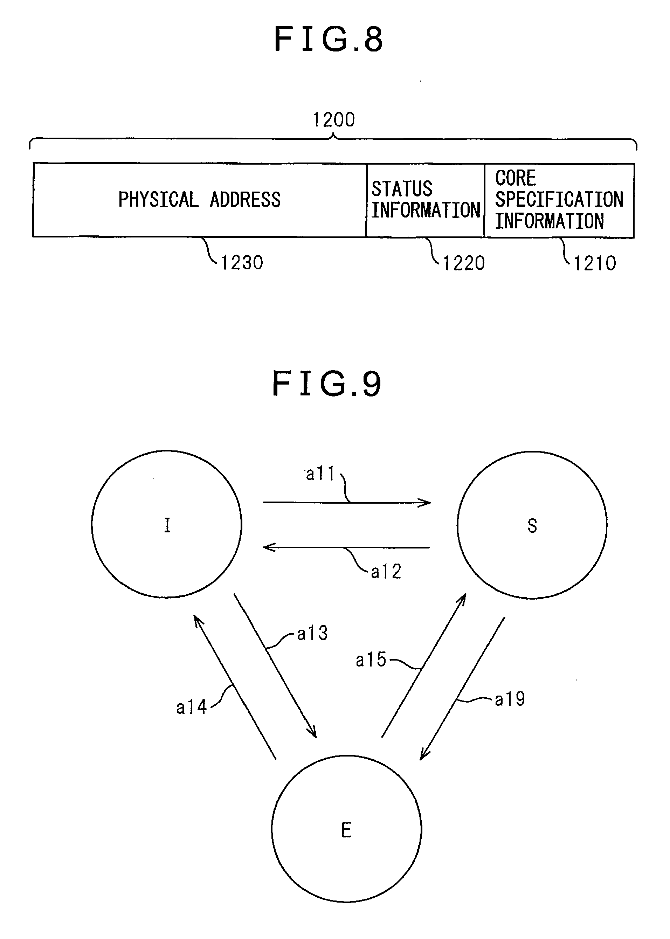

The L2 cache RAM 140 holds part of the data stored by the main memory 240. Further, the L2 cache RAM 140 includes all of the data held by the L1 cache memories. An example of the L2 cache controller 120 and the L2 cache RAM 140 will be explained later using FIG. 5. The operation of the L2 cache controller 120 in accordance with the MESI protocol will be explained later using FIG. 9.

The memory access control unit 160 is a circuit controlling the loading of data from the main memory 240, the storing of data to the main memory 240, the refreshing of the main memory 240, and other operations. The memory access control unit 160 loads or stores data from and to the main memory 240 in accordance with load instructions or a store instructions received from the L2 cache controller 120.

The system bus 220 is a bus connecting the processor 1 and the external memory device 260. The system bus 220 is a circuit functioning in accordance with standards such as the AGP (Accelerated Graphics Port) or PCI (Peripheral Component Interconnect) Express, for example.

The main memory 240 is a DRAM (dynamic random access memory), for example. The external memory device 260 is a disk array of a magnetic disk, a SSD (solid state drive) using a flash memory, etc.

FIG. 2 is a block diagram illustrating one example of a processor cores. By using FIG. 2, the processor core 10 will be explained as a "requesting processor core" requesting cache data to the L2 cache controller, while the processor core 20 is explained as a "requested processor core" from which core data is requested by the L2 cache controller.

The processor core 10 has an instruction unit (IU) 12, an execution unit (EU) 14, an L1 cache controller 16, and an L1 cache RAM 18. The L1 cache controller 16 has a core data response control unit 17.

The processor core 20 has an IU 12a, an EU 14a, an L1 cache controller 16a, and an L1 cache RAM 18a. These components of the processor core 20 have the same functions as the components of the same names as the above processor core 10.

Each instruction unit 12 decodes an instruction read from the L1 cache RAM 18 and supplies register addresses specifying a source register storing the operands used for the decode instruction and instruction execution and a destination register storing the instruction execution results as "processing control signals" to the execution unit 14. The decoded instruction is a load instruction and store instruction for the L1 cache RAM 18, for example. The instruction unit 12 supplies a data request signal to the L1 cache controller 16 to thereby read out instructions from the L1 cache RAM 18.

Each execution unit 14 fetches data from a register inside the execution unit 14 specified by the address and processes the fetched data in accordance with the decoded instruction. The execution unit 14 supplies a load instruction or store instruction as a "data request signal" in accordance with the decoded instruction to the L1 cache controller 16. The L1 cache controller 16 supplies data to the execution unit 14 in accordance with the load instruction. When the execution unit 14 finishes executing the instruction, the execution unit 14 supplies an execution completion signal to the instruction unit 12 for receiving the next processing control signal.

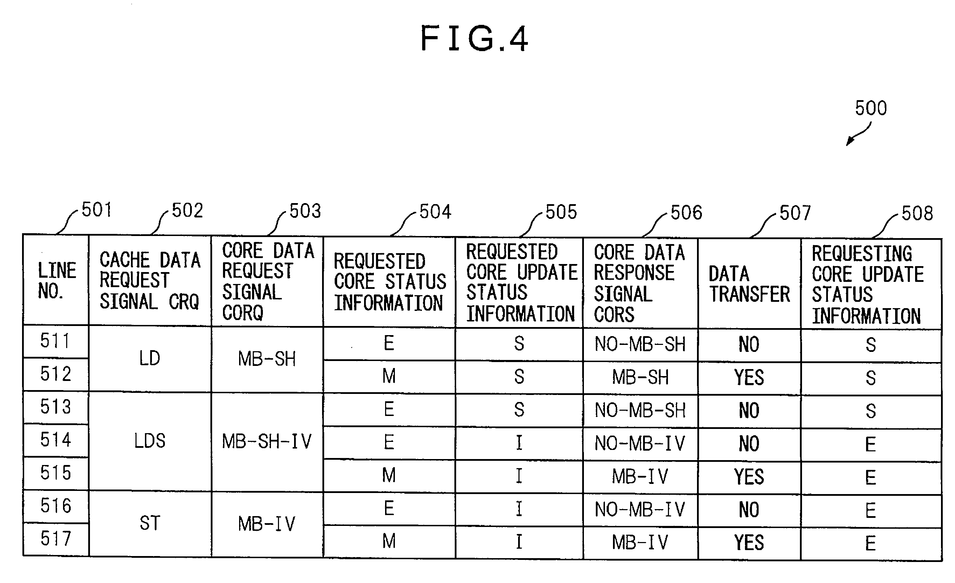

The L1 cache controller 16 of the requesting processor core 10 supplies a cache data request signal CRQ through signal wires w16-3 to the L2 cache controller 120. Further, the processor core 10 receives the cache data response signal CRS as a completion notification, and data or instruction through signal wires w16-4 from the L2 cache controller 120. A detailed example of the cache data request signal CRQ will be explained later using FIG. 4.

The L1 cache controller 16a of the requested the processor core 20 receives a core data request signal CORQ through signal wires w26-2 from the L2 cache controller 120. Further, the processor core 20 sends the core data response signal CORS and the data covered by the request to the L2 cache controller 120. A detailed example of the core data request signal CORQ will be explained later using FIG. 4.

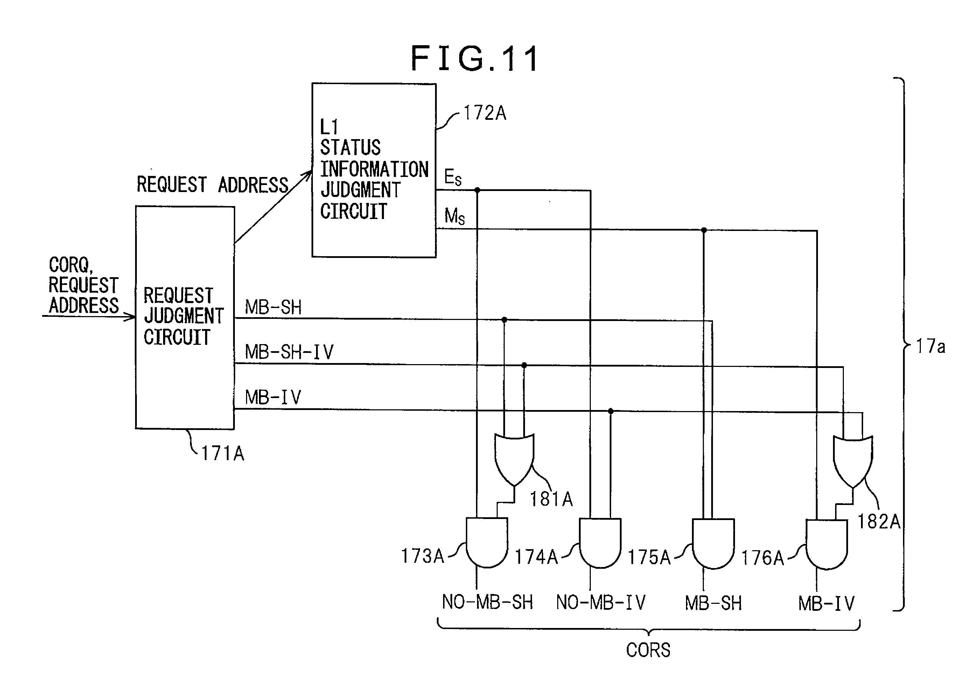

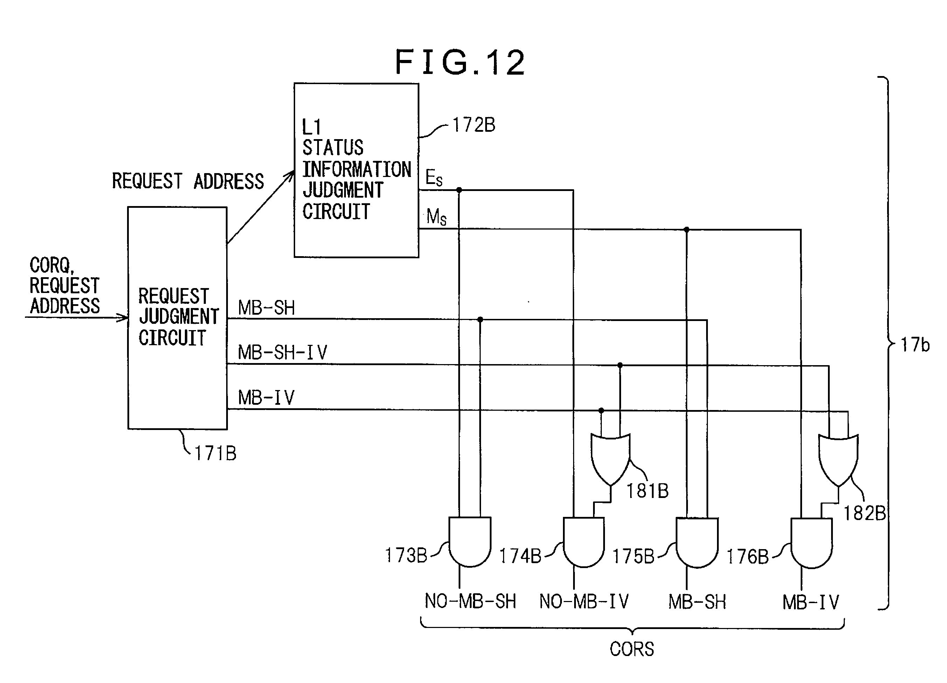

The core data response control unit 17 generates a core data response signal CORS from the core data request signal CORQ received from the L2 cache controller 120. One example of the core data response control unit 17 will be explained later using FIG. 11 or FIG. 12. Detailed examples of the core data request signal CORQ and core data response signal CORS will be explained later using FIG. 4.

Each L1 cache RAM 18 is a memory device which stores instructions and/or data and can perform a read or write operation at a higher speed than the main memory. An example of an L1 cache RAM 18 will be explained later using FIG. 5.

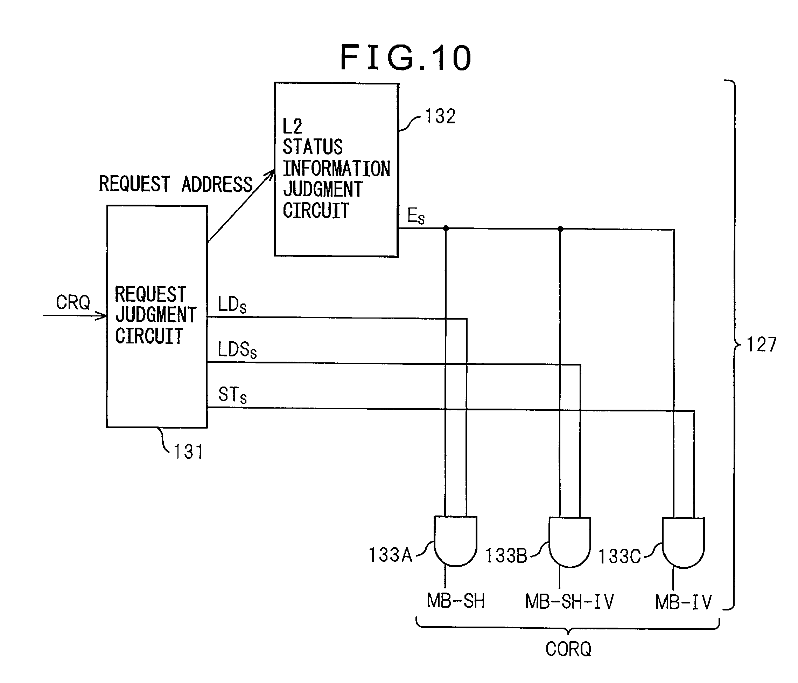

The L2 cache controller 120 has a core data response control unit 127 which generates a core data request signal CORQ from a cache data request signal CRQ. An example of the core data response control unit 127 will be explained later using FIG. 10.

The multiplexing and transfer circuit 130 is a circuit which multiplexes a plurality of core data response signals CORS received from the processor core 10 or 20 and sends the multiplexed signal through signal wires w26-3 used in common by the processor cores 10 and 20. The multiplexing and transfer circuit 130 receives core data response signals CORS and data supplied from the processor core 10 via signal wires w16-1 and receives core data response signals CORS and data from another processor core 20 via signal wires w26-1.

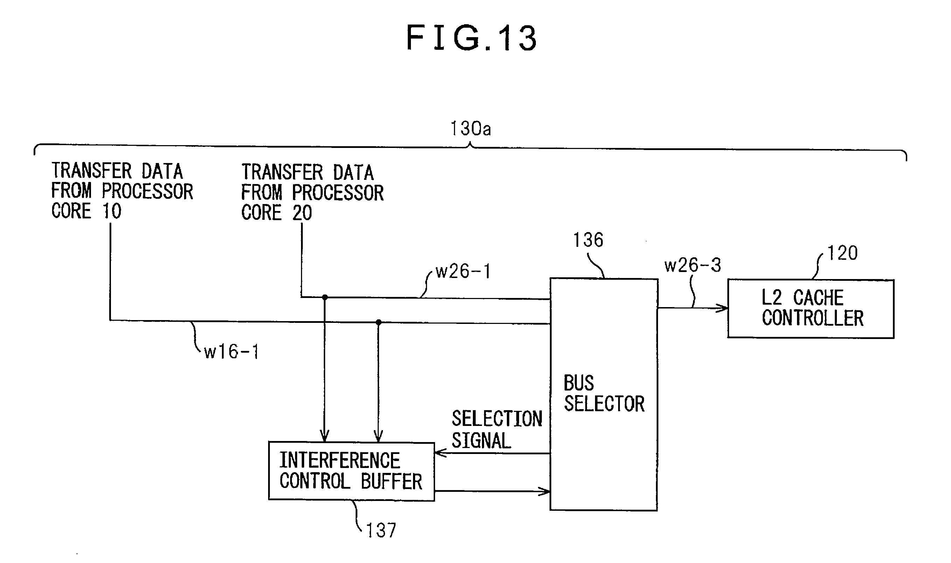

Further, it is possible to reduce the number of the signal wires w26-3 by multiplexing the core data response signals CORS. Unlike a cache data request signal CRQ and core data request signal CORQ, a core data response signal CORS is a signal transferring data, so the bit length is large. For this reason, the multiplexing and transfer circuit 130 can, by multiplexing, select the signal wires w26-1 or signal wires w26-2 and eliminate the increase in the number of the signal wires w26-3. An embodiment of the multiplexing and transfer circuit 130 will be explained later using FIG. 13.

FIG. 3 is a diagram illustrating one example of the change in status of status information of an L1 cache. The status information may be any of four states of "M (Modified)", "E (Exclusive)", "S (Shared)", and "I (Invalidated)". Note that, an example of the status information will be explained based on the MESI protocol, but the status information able to be used in the present embodiment is not limited to the MESI protocol. The MESI protocol plus the state of "O (Owned)", that is, the MOESI protocol, may also be used. Further, instead of the "E" of the MESI protocol, the MOSI protocol using "O" may also be used. For this reason, when the MOESI protocol or MOSI protocol is used, instead of "E", "O" is used. Accordingly, in such a case, the explanation of "E" indicated below may be understood as an explanation of "O".

"I" indicates that the line of the L1 cache RAM 18 has been invalidated. The initial state of the tag is "1", and "0" is registered for the line of the data RAM.

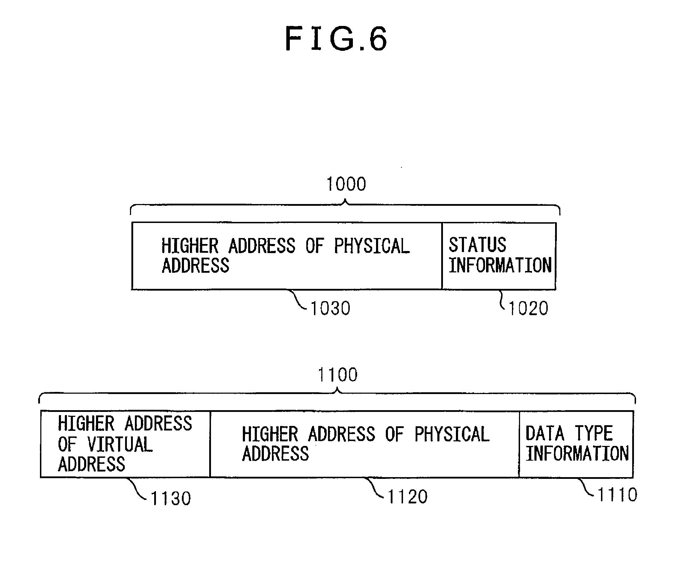

The lines of the L1 cache RAMs of the plurality of processor cores and the lines of the main memory 240 are discriminated by physical addresses as explained later with regard to FIG. 6. "S" indicates the state where the data of a line of the main memory 240 and the data of the lines of the L1 cache RAMs of the plurality of processor cores identified by the same physical addresses as the data of the line of the main memory 240 all match.

"E" indicates the state where the data of a line of an L1 cache RAM 18 registered as "E" matches with data of a line stored in the main memory 240 identified by the same physical address, but does not match with data of lines of other L1 cache RAMs. In the case of data registered as "E", a processor core can modify the data without sending a control signal to the other processor cores. At this time, the processor core, at the same time as modifying the data, changes the status information of the data from "E" to "M" (status change a7) and requests to make the status information of other processor cores "I".

"M" indicates the presence of data only at a line of an L1 cache RAM 18 of one processor core registered as "M". In other words, it indicates that data of an L1 cache RAM 18 registered as "M" is modified from data of the same physical address held in the L1 cache RAMs of other processor cores or the main memory 240.

The status change a1 from "M" to "I", the status change a2 from "S" to "I", and the status change a3 from "E" to "I" are status changes for invalidating lines to create empty slots for registering other data in the cache memories.

The status change a4 from "I" to "S" indicates the change of the status information of data from "I" to "S" for a processor core to register data on other cache memories.

The status change a5 from "E" to "S" and the status change a6 from "M" to "S" indicate changes of the status information of lines from "E" or from "M" to "S" due to another processor core requesting data of the L1 cache RAM 18. As a result, the data of the line of the L1 cache RAM and the data of the line of the main memory 240 identified by the physical address of the line registered as "S" are shared.

The status change a7 from "E" to "M" indicates that the status information of data has changed from "E" to "M" due to the processor core rewriting the data of the L1 cache RAM 18.

The status change a8 from "I" to "E" indicates that the status information of data has changed from "I" to "E" due to the processor core registering data not held by the other processor cores in the L1 cache RAM 18.

The status change a9 from "S" to "E" indicates that the status information of data has changed from "S" to "E" due to the processor core requesting invalidation of data to the other processor cores.

FIG. 4 is a table illustrating one example of a relationship between signal sents between a processor core and the L2 cache controller and the status information. The table 500 illustrated in FIG. 4 explains the relationship between the type of the cache data request signal CRQ, the type of the core data request signal CORQ, the type of the core data response signal CORS, the status information of the L1 cache memories, and the status information of the L2 cache explained using FIG. 2.

At the column 501, a line number specifying a line is indicated. At the column 502, the type of the cache data request signal CRQ which the requesting processor core outputs is indicated. The cache data request signal CRQ is any of a signal indicating a load instruction LD that is a load signal LDs, a signal indicating a store instruction ST that is a store signal STs, and a signal specifying a load store instruction LDS that is a load store signal LDSs.

The store instruction ST is an instruction by which a requesting processor core requests data be written into the L2 cache RAM. The load store instruction LDS is an instruction by which the requesting processor core requests readout of data and performs a request indicating a high possibility of modification of the read out data and issuance of a store instruction ST. The load instruction LD is an instruction requesting that the requesting processor core read out data and indicates that there is no possibility of the core modifying the read out data and issuing a store instruction ST.

Note that, the L1 cache controller 16 of the requesting processor core refers to the data type information 1110 of the TLB 310 explained later using FIG. 5 and generates either a load store instruction or a load instruction when receiving a load instruction from an execution unit 14. When the data covered is modifiable, there is a high possibility that after the requesting processor core acquires the data, it will modify the data and issue a store instruction, so the requesting processor core outputs a load store instruction.

On the other hand, when the data covered is not modifiable, the requesting processor core outputs a load instruction LD.

At the column 503, the core data request signal CORQ supplied from the L2 cache controller 120 to the requested processor core is indicated.

The core data request signal CORQ is any of an MB-SH signal, MB-SH-IV signal, and MB-IV signal.

The MB-SH signal is a signal requesting to make the status information of the L1 and L2 cache memories "S". When the requested processor core sends an MB-SH signal to the L2 cache controller 120, simultaneously the data covered by the request is also sent.

The MB-IV signal is a signal requesting to make the status information of the L1 and L2 cache memories "I". When the requested processor core sends an MB-IV signal to the L2 cache controller 120, simultaneously the data covered by the request is also sent.

The MB-SH-IV signal is a signal requesting to make the status information of the L1 cache of the requested processor core "S" or "I".

The L2 cache controller 120 supplies either of the above-mentioned MB-SH signal, MB-SH-IV signal, and MB-IV signal to the requested processor core in accordance with the type of the cache data request signal CRQ. Note that, the processor core specified by the requested processor core is a processor core holding the data covered by the request by the status information "E". As explained later in FIG. 8, when the status information of data held by the L2 cache RAM is "E", the L2 cache controller 120 holds the core identification information 1210 specifying the processor core held by "E" at the same line as the line indicated by "E". For this reason, the L2 cache controller 120 can refer to the core identification information 1210 and specify the processor core holding the data covered by the request by the status information "E".

As indicated at line numbers 511 and 512, when the L2 cache controller 120 receives a load instruction LD, it supplies an MB-SH signal to the requested processor core.

As indicated at line numbers 513 to 515, when the L2 cache controller 120 receives a load store signal LDSs, it supplies an MB-SH-IV signal to the requested processor core.

As indicated at line numbers 516 and 517, when the L2 cache controller 120 receives a store instruction ST, it supplies an MB-IV signal to the requested processor core.

At the column 504, the status information of the L1 cache RAM before the requested processor core receives the core data request signal CORQ is indicated. For the core status information of the requesting side indicated in column 504, "E" or "M" is indicated.

At the column 505, the status information updated by the requested processor core after the requested processor core sends the core data response signal CORS to the L2 cache controller is indicated.

At the column 506, the core data response signal CORS to be sent from the requested processor core to the L2 cache controller 120 is indicated. At the column 507, it is indicated whether the data covered by the request has been transferred from the requested processor core to the L2 cache controller 120. At the column 508, the status information of the requesting processor core updated after receiving the cache data response signal CRS is indicated.

The core data response signal CORS may be an MB-SH signal, MB-IV signal, NO-MB-SH signal, or NO-MB-IV signal. The MB-SH signal and MB-IV signal are as explained above.

The NO-MB-SH signal is a signal requesting to make the status information of lines specified by physical addresses the same as data covered by a request in the L1 and L2 cache memories "S" without sending the data covered by the request from the processor core. The NO-MB-SH signal is also called a "no-data-modification notification signal".

The NO-MB-IV signal is a signal which makes the status information of lines specified by the same physical address as data covered by a request in the L1 and L2 cache memories "I" without sending data covered by the request from the requested processor core.

The L1 cache controller 16a of the requested processor core outputs either of the MB-SH signal, MB-IV signal, NO-MB-SH signal, and NO-MB-IV signal in accordance with the held status information of data covered by the request.

At the line number 511, the signal to be transferred and the change in the status information are indicated in the case where the cache data request signal CRQ is a "load instruction" and the status information of the data covered at the requested processor core is "E". In this case, the requested processor core sends the NO-MB-SH signal to the L2 cache controller 120 and does not send the data covered by the request.

The requested processor core does not send the data covered by the request becomes the status information of data covered by the request held at the requested processor core is not "M", so the data held at the L2 cache and the data held at the requested processor core match. Receiving the NO-MB-SH, the L2 cache controller 120 sends the data held by the L2 cache RAM to the requesting processor core. In this way, the processor 1 can eliminate the transmission of unmodified data from the requested processor core to the L2 cache controller 120 as an unnecessary data transfer.

Further, the requested processor core, after sending the NO-MB-SH signal, updates the status information of the data covered by the request to "S". Further, receiving the cache data response signal CRS, the requesting processor core updates the status information of data covered by the request to "S".

At the line number 512, the signals to be transferred and the change in the status information are indicated in the case where the cache data request signal CRQ is a "load instruction" and the status information of the data covered of the requested processor core is "M". In this case, the requested processor core sends the MB-SH signal and the data covered by the request to the L2 cache controller 120. Furthermore, the requested processor core updates the status information of the data covered by the request to "S" after sending the MB-SH signal. Further, receiving the cache data response signal CRS, the requesting processor core updates the status information of the data covered by the request to "S".

The status information of data of the requested processor core and requesting processor core is updated to "S" after sending the MB-SH signal in this way because the load instruction LD is a load instruction specifying not to modify the data. Since the status information is "S", the other processor cores 30 and 40 become the requesting processor cores. When accessing the same data, it is possible to eliminate the transmission of control signals for changing the status information of the requested processor core from "T" or from "M" to "S".

The example illustrating at the line number 513 is an example of using the core data response control unit relating to the first embodiment indicated in FIG. 11 to transmit the core data response signal CORS.

As indicated at line number 513, in the case where the core data request signal CORQ is MB-SH-IV and the status information of the data covered by the request held by an L1 cache is "E", the NO-MB-SH signal is transmitted. The requested processor core, after sending the NO-MB-SH signal, updates the status information of the data covered by the request to "S". Further, receiving the cache data response signal CRS, the requesting processor core updates the status information of the data covered by the request to "S".

In the same way as the case illustrating at the line number 511, the data covered by the request held by the requested processor core and the data covered by the request held by the L2 cache match when the status information of the requested processor core is "E". For this reason, the requested processor core does not transfer data to the L2 cache controller 120, so the processor 1 can eliminate unnecessary data transfer.

The generation of the signals illustrated at the line number 514 is an example where the core data response control unit according to the second embodiment illustrated in FIG. 12 is used to send the core data response signal CORS.

As illustrated at the line number 514, in the case where the core data request signal CORQ is MB-SH-IV and the status information of the data covered by the request held at an L1 cache is "E", an NO-MB-IV signal is transmitted. The requested processor core updates the status information of the data covered by the request to "I" after sending the NO-MB-SH signal. Further, receiving the cache data response signal CRS, the requesting processor core updates the status information of the data covered by the request to "E".

It is possible to update the status information of the requesting processor core to "E" by updating the status information of the requested processor core to "I" in this way. The data acquired by the load store signal LDSs is modifiable data, so there is a high possibility of the data being modified by the requesting processor core and a store instruction being output. For this reason the requesting processor core does not have to send a control signal so as to change the status information of the requested processor core from "S" to "I" by updating the status of the requested processor core to "I" after transmission of data. Accordingly, the processor 1 can eliminate the need for transmission of unnecessary control signals.

As illustrated at line number 515, in the case where the core data request signal CORQ is MB-SH-IV and the status information of the data covered by the request held at an L1 cache is "M", an MB-IV signal is sent.

The requested processor core updates the status information of the data covered by the request to "I" at the same time as sending the MB-IV signal. Further, receiving the cache data response signal CRS, the requesting processor core updates the status information of the data covered by the request to "E". These are the same as the status changes explained at the line number 514. This is because the data acquired by the load store signal LDSs is modifiable data.

By updating the status of the requested processor core to "I" after sending the data, the requested processor core can make modifications without causing a change of the status of the data acquired by the load store signal LDSs from "S" to "I". Accordingly, the processor 1 can eliminate the need for transmission of wasteful control signals.

As illustrated at the line number 516, in the case where the core data request signal CORQ is MB-IV and the status information of the data covered by the request held at an L1 cache is "E", the NO-MB-IV signal is sent. The requested processor core, after sending the NO-MB-IV signal, updates the status information of the data covered by the request to "I". Further, receiving the cache data response signal CRS, the requesting processor core updates the status information of the data covered by the request to "E".

In the same way as the examples illustrated at the line numbers 511 and 513, when the status information of the requested processor core is "E", the data covered by the request held by the requested processor core and the data covered by the request held by the L2 cache match. For this reason, the requested processor core does not transfer data to the L2 cache controller, so the processor 1 can eliminate unnecessary data transfer.

As illustrated at the line number 517, in the case where the core data request signal CORQ is MB-IV and the status information of the data covered by the request held at an L1 cache is "M", an MB-IV signal is sent. The requested processor core, updates the status information of the data covered by the request to "I" after sending the MB-IV signal. Further, receiving the cache data response signal CRS, the requesting processor core updates the status information of the data covered by the request to "E".

FIG. 5 is a block diagram illustrating an example of an L1 cache RAM. The L1 cache RAM 18 has a translation lookaside buffer (TLB) 310, a tag RAM 320, an L1 data RAM 340, an equivalence comparison circuit 350, a hit way signal selection circuit 360, and a way selection circuit 370.

In the load operation, the L1 cache controller 16 supplies an index address to the tag RAM 320 or L1 data RAM 340 and reads out data from the line specified by the index address.

In the store operation, the L1 cache controller 16 supplies a write enable signal WE, index address, and write data WD to the tag RAM 320 or L1 data RAM 340 and registers them at the line specified by the index address.

The TLB 310 converts the logical address (virtual address) to a physical address. In other words, the TLB 310 supplies a physical address unambiguously corresponding to the virtual address supplied from the L1 cache controller 16 to the equivalence comparison circuit 390.

The TLB 310 is a circuit outputting the higher address in a physical address from the line specified by the index address. The TLB 310 has a tag unit holding the higher addresses in virtual addresses forming virtual page numbers and a data unit holding higher addresses in the physical addresses. The TLB 310 receives a virtual address from the L1 cache controller 16. The TLB 310 uses part of the received virtual address as the index address for selecting entries of the tag unit and data unit. The TLB 310 supplies the physical addresses of data units of the same entry to the equivalence comparison circuit 350 when the higher address in the virtual address received from the L1 cache controller and the higher address in the virtual address held in the tag unit match. The data structure of the data held in the TLB 310 will be explained later in FIG. 6.

The tag RAM 320, is an n-way set associative type RAM, for example. An "n-way set associative type RAM" means a RAM at which n number of ways are selected by a single index address. The tag RAM 320 has n number of ways, but to facilitate the explanation in FIG. 5, a single way is indicated. The tag RAM 320 has a write amplifier 321, row decoder 322, memory cell 323, column decoder 324, column selection circuit 326, and sense amplifier 328.

The tag RAM 320 receives a virtual address from the L1 cache controller 16. The tag RAM 320 uses part of the received virtual address as the index address for selecting entries of the tag unit and data unit.

The index address specifies a word line and a bit line of a memory cell. The row decoder 322 decodes a higher address in the index address that is the row address, and thereby activates the word line of the memory cells 323. The memory cells connected to the activated word line change the potential of the bit lines. The column decoder 324 decodes the column address of the lower bits of the index address so as to specify the bit line and supplies a specified bit line specification signal to the column selection circuit 326. The column selection circuit 326 selects the bit line indicated by the bit line specification signal.

The sense amplifier 328 amplifies potential changes of the bit lines. The sense amplifier 328 performs an amplification operation when a write enable signal WE (Write Enable) is not being supplied. The write amplifier 321 supplies a signal of the write data WD (Write Data) to the bit line specified by the column decoder when a write enable signal WE is being supplied. When the bit line is supplied with the signal of the write data WD, data is written in a memory cell specified by the bit line and the word line activated by the row decoder 322.

A line of the tag RAM 320 holds a tag specifying the higher address in the physical address and holds status information. The structure of the data held by the line of the tag RAM 320 will be explained later using FIG. 6.

The equivalence comparison circuit 350 compares the tag output from the sense amplifier 328 and the tag output from the TLB 310. When the two tags match (below, referred to as a "cache hit"), the equivalence comparison circuit 350 supplies a cache hit signal to the hit way signal selection circuit 360. When the tags do not match (below, referred to as a "cache miss"), it supplies a cache miss signal to the L1 cache controller 16.

The hit way signal selection circuit 360 receives cache hit signals output from a plurality of ways and supplies a hit way selection signal specifying at what ways cache hits occurred to the way selection circuit 370.

The L1 data RAM 340 has a write amplifier 341, row decoder 342, memory cell 343, column decoder 344, column selection circuit 346, and sense amplifier 348. The write amplifier 341, row decoder 342, memory cell 343, column decoder 344, column selection circuit 346, and sense amplifier 348 perform the similar operations as the components of the same name explained with reference to the tag RAM 320, so explanations will be omitted.

A line of an L1 data RAM stores data or instructions. Data is read by the sense amplifier 348 from a line specified by an index address the same as the tag RAM 320.

The ways selection circuit 370 receives the read data (RD) from the ways. Further, the way selection circuit 370 selects the read data RD by a hit selection signal supplied from the hit way signal selection circuit 360. The way selection circuit 370 supplies the selected read data RD to the L1 cache controller 16.

FIG. 6 is a diagram illustrating one example of the data structure of the tag RAM of an L1 cache and the data structure of the TLB. Reference numeral 1000 designates the data structure of a line of the tag RAM 320, while 1100 designates the data structure of a line of the TLB 310.

The data structure 1000 of the tag RAM 320 has status information 1020 and a higher address 1030 in the physical address. As illustrated in FIG. 3, the status information 1020 specifies the state of a line as being any of the four states of "M", "E", "S", and "I". The status information 1020, for example, is 2 bits. As illustrated by 1030, the tag is the higher address in the physical address.

The data structure 1100 of the TLB 310 has data type information 1110, a higher address 1120 in the physical address, and a higher address 1130 in the virtual address. The data type information 1110 is information specifying if the data specified by the physical address is modifiable data or nonmodifiable data. For example, when the data relates to instructions of a program, the data is not modified, so the data type information 1110 indicates "invalid". On the other hand, when the data is modifiable data, the data type information 1110 indicates "valid".

The higher address 1130 in the virtual address is used for comparison with the virtual address supplied from the L1 cache controller 16. The higher address 1120 in the physical address is used in the equivalence comparison circuit 350 for comparison with the physical address output from the tag RAM 320.

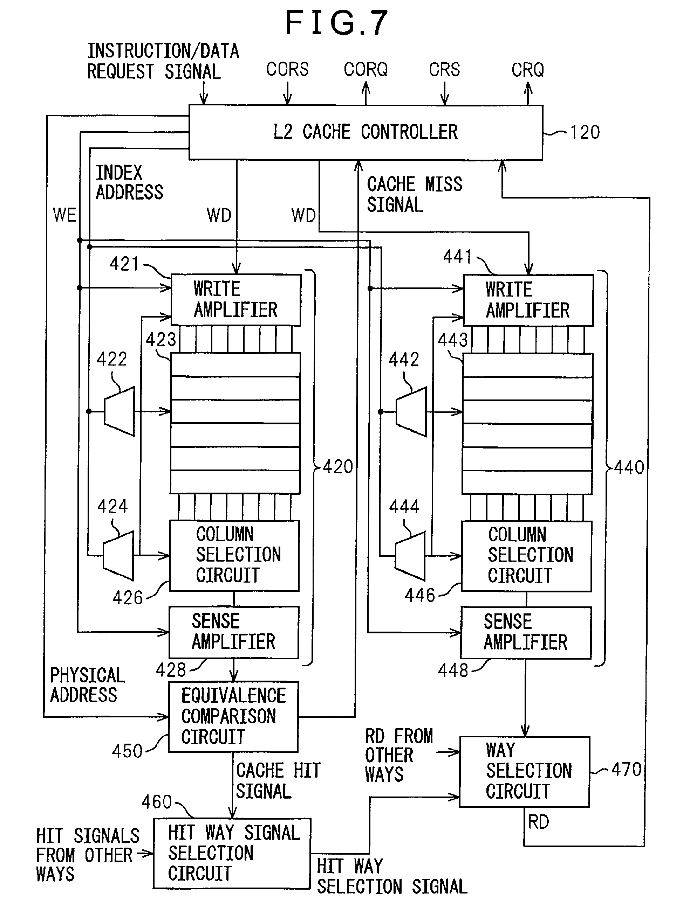

FIG. 7 is a block diagram illustrating one example of the L2 cache RAM. The L2 cache RAM 140 has a tag RAM 420, L2 data RAM 440, equivalence comparison circuit 450, hit way signal selection circuit 460, and way selection circuit 470.

The L2 cache RAM 140 does not have a TLB since the cache data request signal CRQ supplied from the L1 cache controller 16 does not include any physical address. The components of the L2 cache RAM 140 illustrated in FIG. 7 perform the same operations as the components specified by the same names explained in the L1 cache RAM 18, so explanations will be omitted.

FIG. 8 is a diagram illustrating an example of the data structure of data held at the tag RAM of the L2 cache. Reference numeral 1200 indicates the data structure of data held at the tag RAM 420 illustrated in FIG. 7, while 1210 indicates core identification information specifying the processor core holding the data. Reference numeral 1230 indicates a physical address. The core identification information 1210 specifies a processor core holding data of the status information "E" or "M". The status information 1220 specifies which of the three "E", "S", and "I" the status of the line is.

When the status information 1020 of data held by a processor core is "E" or "M", the status information 1220 is "I". For this reason, when the L2 cache controller 120 requests core data from the requested processor core, the status information 1220 of the tag RAM 420 is "I". The status information 1220 is 2 bits, for example. The physical address 1230 specifies the physical address of the main memory in which the data specified by the index address of the tag RAM 420 is stored.

In the above explanation, the core identification information 1210 and the status information 1220 were explained differentiated, but the core identification information 1210 and the status information 1220 may also be combined and called the "status information".

FIG. 9 is a diagram illustrating examples of the status changes of status information of the L2 cache. The status information is any of the three states of "E", "S", and "I".

The status change a11 from "I" to "S" indicates that the status information of a line of the L2 data RAM 440 storing the acquired data changes from "I" to "S" due to acquisition of data from another processor core.

The status change a12 from "S" to "I" indicates that the status information changes from "S" to "I" due to invalidation of a line due to registration of other data.

The status change a13 from "I" to "E" indicates that the status information of a line of the L2 data RAM 440 storing acquired data changes from "I" to "E" due to acquiring data from another processor core and changing the line of the other processor core to "I".

The status change a14 from "E" to "I" indicates that the status information changes from "S" to "I" due to invalidation of a line due to registering other data.

The status change a15 from "E" to "S" indicates that the status information of a line storing transfer data changes from "E" to "S" due to the transfer of data in a core to another core due to a request for core data from another core.

The status change a16 from "S" to "E" indicates that the status information of a line storing data covered by invalidation changes from "S" to "E" due to a request for invalidation of data to other cores.

FIG. 10 is a block diagram illustrating one example of the core data response control unit 127. The core data response control unit 127 selects the signal for reading out data from the requested processor core in accordance with the type of the core data request signal CORQ. Further, the core data response control unit 127 is a circuit supplying a core data request signal CORQ to the requested processor core only when the status information of the L2 cache tag is "E". As indicated in FIG. 10, the core data response control unit 127 has a request judgment circuit 131, a L2 status information judgment circuit 132, and AND circuits 133A, 133B, and 133C.

When receiving a cache data request signal CRQ, the request judgment circuit 131 judges the signal type using a bit signal specifying the signal type in the cache data request signal CRQ. When the judged signal type is LD, the request judgment circuit 131 outputs a load signal LDs to the AND circuit 133A. When the judged signal type is LDS, the request judgment circuit 131 outputs a load store signal LDSs to the AND circuit 133B. When the judged signal type is ST, the request judgment circuit 131 outputs a store signal STs to the AND circuit 133C.

Further, the request judgment circuit 131 supplies a signal specifying the request address in the cache data request signal CRQ to the L2 status information judgment circuit.

When receiving the request address, the L2 status information judgment circuit 132 acquires status information from the tag RAM 420 illustrated in FIG. 7 based on the request address. When the acquired status information is "E", the L2 status information judgment circuit 132 outputs an Es signal indicating that the status information is "E". When the status information is other than "E", the L2 status information judgment circuit 132 does not output an Es signal.

When receiving the ST signal and Es signal, the AND circuit 133A supplies the MB-SH signal to the requested processor core 20. When receiving the load store signal LDSs and Es signal, the AND circuit 133B supplies the MB-SH signal to the requested processor core 20. When receiving the load signal LDs and Es signal, the AND circuit 133C supplies the MB-IV signal to the requested processor core 20.

FIG. 11 is a block diagram illustrating a first embodiment of a core data response control unit. The core data response control unit 17a according to the first embodiment is a circuit supplying a core data response signal CORS determined in accordance with the type of the core data request signal CORQ and the status information of the core data requested to the L2 cache controller. Further, the core data response control unit 17a generates the NO-MB-SH signal indicating the line number 513 of FIG. 4.

As illustrated in FIG. 11, the core data response control unit 17a has a request judgment circuit 171a, an L1 status information judgment circuit 172a, AND circuits 173A to 176A, and OR circuits 181A and 182A.

When receiving the core data request signal CORQ, the request judgment circuit 171a judges which of the MB-SH signal, MB-SH-IV signal, and MB-IV signal corresponds to the core data request signal CORQ. When the judged signal type corresponds to the MB-SH signal, the request judgment circuit 171 supplies the MB-SH signal to the OR circuit 181A and AND circuit 173A. When the judged signal type corresponds to the MB-SH-IV signal, the request judgment circuit 171a supplies the MB-SH-IV signal to the OR circuit 181A and OR circuit 182A. When the judged signal type corresponds to the MB-IV signal, the request judgment circuit 171a supplies the MB-SH signal to the OR circuit 182A and AND circuit 174A.

Further, the request judgment circuit 171a supplies the received request address to the L1 status information judgment circuit 172.

When receiving the request address, the L1 status information judgment circuit 172a acquires the status information of the core data from the tag RAM 420 based on the request address. When the acquired status information is "E", the L1 status information judgment circuit 172a outputs a signal indicating the status information is "E" to the AND circuit 173A and AND circuit 174A. When the acquired status information is "M", the L1 status information judgment circuit 172a supplies a signal indicating the status information is "M" to the AND circuit 175A and AND circuit 176A.

When receiving the MB-SH signal and MB-SH-IV signal, the OR circuit 181A supplies an output signal to the AND circuit 173A. When receiving the MB-IV signal and MB-SH-IV signal, the OR circuit 182A supplies the output signal to the AND circuit 176A.

When receiving the output signal of the OR circuit 181A and the signal indicating the status information is "E", the AND circuit 173A supplies the NO-MB-SH signal to the L2 cache controller. When receiving the signal indicating the status information is "E" and MB-IV signal, the AND circuit 174A supplies the NO-MB-IV signal to the L2 cache controller. When receiving the signal indicating the status information is "M" and MB-SH signal, the AND circuit 175A supplies the MB-SH signal to the L2 cache controller. When receiving the output signal of the OR circuit 182A and the signal indicating the status information is "M", the AND circuit 176A supplies the MB-IV signal to the L2 cache controller.

FIG. 12 is a block diagram illustrating a second embodiment of a core data response control unit. The core data response control unit 17b according to the second embodiment is a circuit supplying a core data response signal CORS determined in accordance with the type of the core data request signal CORQ and the status information of core data requested to the L2 cache controller. Further, the core data response control unit 17b generates the NO-MB-SH signal indicating the line number 514 of FIG. 4.

As indicated in FIG. 12, the core data response control unit 17b has a request judgment circuit 171B, L1 status information judgment circuit 172B, AND circuits 173B to 176B, and OR circuits 181B and 182B.

When receiving the core data request signal CORQ, the request judgment circuit 171B judges which of the MB-SH signal, MB-SH-IV signal, and MB-IV signal corresponds to the core data request signal CORQ. When the judged signal type is the MB-SH signal, the request judgment circuit 171 supplies the MB-SH signal to the AND circuits 173B and 175B. When the judged signal type is the MB-SH-IV signal, the request judgment circuit 171B supplies the MB-SH-IV signal to the OR circuit 181B and OR circuit 182B. When the judged signal type is the MB-IV signal, the request judgment circuit 171B supplies the MB-SH signal to the OR circuit 181B and the OR circuit 182B.

Further, the request judgment circuit 171A supplies the received request address to the L1 status information judgment circuit 172B.

When receiving a request address, the L1 status information judgment circuit 172A acquires the status information of the core data covered from the tag RAM 420 based on the request address. When the acquired status information is "E", the L1 status information judgment circuit 172a outputs the signal indicating the status information is "E" to the AND circuit 173B and AND circuit 174B. When the acquired status information is "M", the L1 status information judgment circuit 172B supplies the signal indicating the status information is "M" to the AND circuit 175B and the AND circuit 176B.

When receiving the MB-SH-IV signal and the MB-IV signal, the OR circuit 181A supplies the output signal to the AND circuit 174B. When receiving the MB-SH-IV signal and MB-IV signal, the OR circuit 182A supplies the output signal to the AND circuit 176B.

When receiving the MB-SH signal and signal indicating the status information is "E", the AND circuit 173B supplies the NO-MB-SH signal to the L2 cache controller. When receiving the signal indicating the status information is "E" and the output signal of the OR circuit 181B, the AND circuit 174B supplies the NO-MB-IV signal to the L2 cache controller. When receiving the signal and MB-SH signal indicating the status information is "M", the AND circuit 175B supplies the MB-SH signal to the L2 cache controller. When receiving the output signal of the OR circuit 182B and the signal indicating the status information is "M", the AND circuit 176B supplies the MB-IV signal to the L2 cache controller.

FIG. 13 is a block diagram illustrating one example of the multiplexing and transfer circuit. The multiplexing and transfer circuit 130 has a bus selector 136 and an interference control buffer 137. The bus selector 136 operates so as to select either transfer data from the processor core 10 or transfer data from the processor core 20 and supply it to the L2 cache controller 120. The transfer data includes the core data response signal CORS and core data.

The transfer data from the processor core is transferred synchronized with one of the cycles among two cycles of the system clock. The bus selector 136 detects a change of the "high" or "low" of the transfer data sent over the selected signal wires and switches to unselected signal wires. The bus selector 136 supplies a selection signal specifying which of the signal wires to select to the interference control buffer 137.

When transfer data is transferred synchronized with the same system clock, the interference control buffer 137 buffers the transfer data sent over unselected signal wires specified by the selection signal. Further, when switching to unselected signal wires, the bus selector 136 supplies the buffered signal to the bus selector 136.

Note that, the signal wires w16-1 and w26-1 are signal buses for transmitting data, so, the bus width becomes 64 wires when a 64-bit signal is transferred, for example. The number of the signal wires s26-3 connecting the bus selector 136 and the L2 cache controller 120 can be made 64 by selecting the signal wires w26-1 or signal wires w26-2 by multiplexing in the bus selector 136.

In the above way, the data is not sent to the L2 cache controller 120 when transferring the NO-MB-SH signal or NO-MB-IV signal to the L2 cache controller 120. For this reason, the transfer of the NO-MB-SH signal or NO-MB-IV signal reduces the chances of data being sent simultaneously from two processor cores to the L2 cache controller. Accordingly, the processor 1 can use the multiplexing and transfer circuit 130 to select the signal wires w26-1 or signal wires w26-2 and make the number of the signal wires w26-3 64. In this way, the processor 1 provides the multiplexing and transfer circuit 130 upstream of the locations where the wire densities become high and thereby can reduce the chip area.

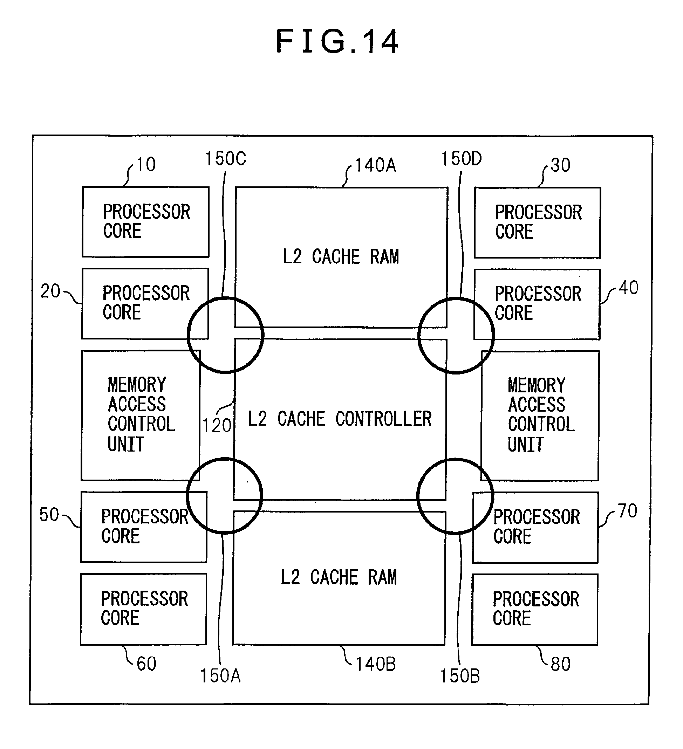

FIG. 14 is a diagram illustrating one example of the layout positions of the functional parts of the processor. The regions 150A to 150D are cramped parts where the densities of the signal wires between the two processor cores and the L2 cache controller become high. The cramped parts 145A to B are regions where the signal wires from the two processor cores are arranged. Therefore, it is possible to halve the bus widths output from the two processor cores by arranging the multiplexing and transfer circuit 130 at the input signal of the data response signal at the cramped parts 145A to B. For this reason, the multiplexing and transfer circuit 130 enables the wire densities of the cramped parts to be lowered and the functional parts to be efficiently laid out.

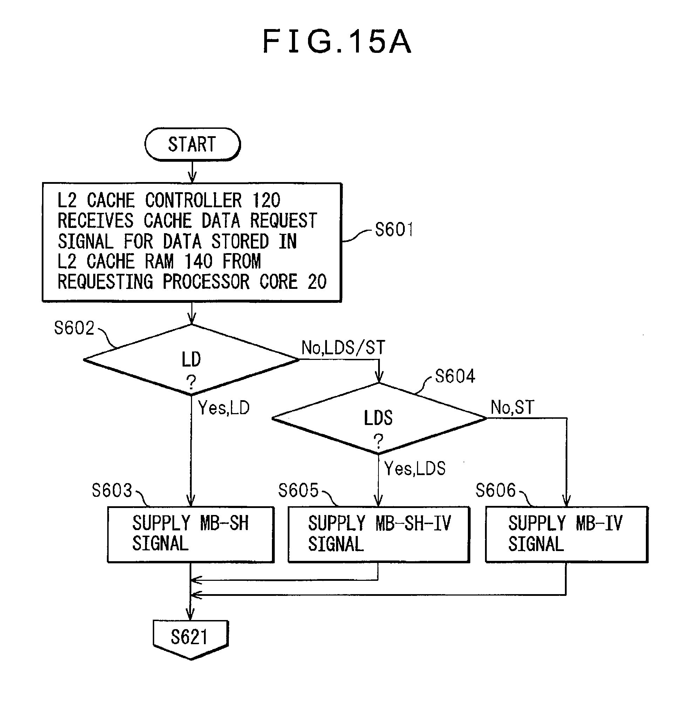

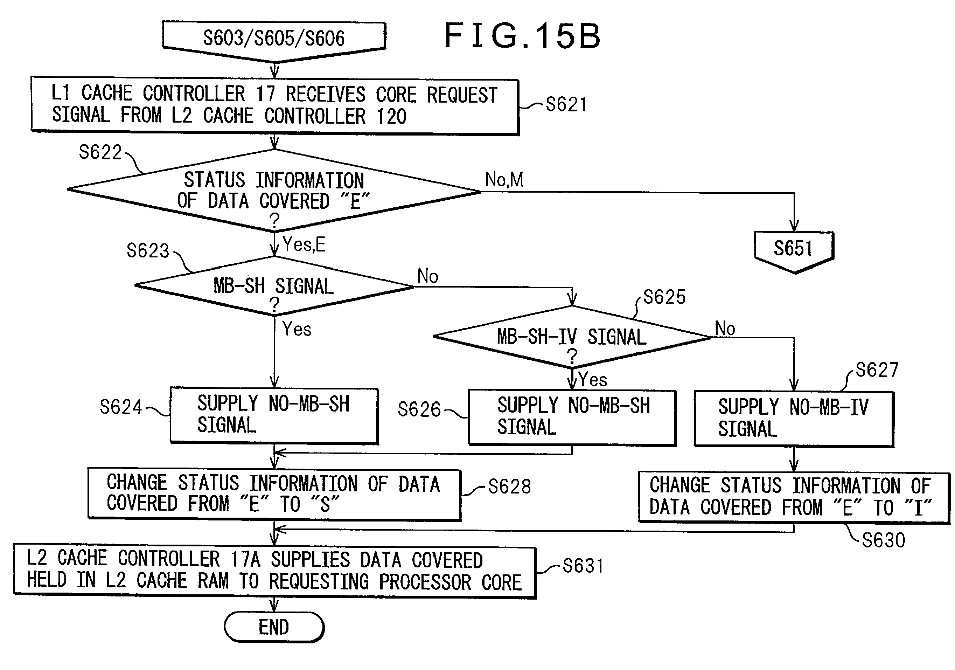

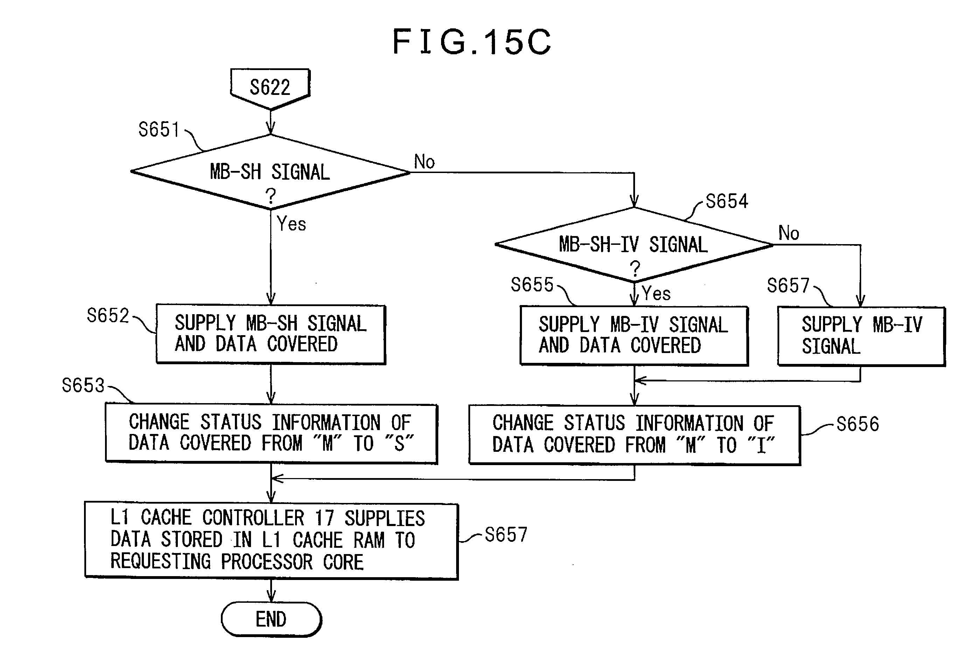

FIG. 15A is a flow chart illustrating an example of the data processing by the processor. First, the L2 cache controller 120 receives from the requesting processor core a cache data request signal CRQ (S601) as an access request for data stored in the L2 cache RAM 140.

The L2 cache controller 120 judges if the cache data request signal CRQ is a load instruction LD (S602).

When the cache data request signal CRQ is a load instruction LD (S602, Yes), the L2 cache controller 120 supplies an MB-SH signal to the requested processor core (S603), then performs the operation illustrated at S621 explained later.

When the cache data request signal CRQ is not a load instruction LD (S602, No), the L2 cache controller 120 judges if the cache data request signal CRQ is a load store instruction LDS (S604). When the cache data request signal CRQ is a load store instruction LDS (S604, Yes), the L2 cache controller 120 supplies an MB-SH-IV signal to the requested processor core (S605), then performs the operation illustrated at S621 explained later.

When the cache data request signal CRQ is not a load store instruction LDS (S604 No), the L2 cache controller 120 supplies an MB-IV signal to the requested processor core (S606), then performs the operation illustrated at S621 explained later.

The L1 cache controller 16 receives a core data request signal CORQ from the L2 cache controller 120 (S621).

The L1 cache controller 16 refers to the L1 cache RAM 18 and judges if the status information of the data covered by the request is "E" (S622).

When the status information is "E" (S622, Yes), the L1 cache controller 16 judges if the core data request signal CORQ is a load instruction LD (S623). When the status information is not "E" (S622, No), the L1 cache controller 16 then performs the operation illustrated at S651 explained later.

When the core data request signal CORQ is an MB-SH signal (S623, Yes), the L1 cache controller 16 supplies an NO-MB-SH signal to the L2 cache controller 120 (S624). Furthermore, the L1 cache controller 16 changes the status information of the data covered from "E" to "S" (S628). Further, the L2 cache controller performs the operation illustrated at S631 explained later.

When the core data request signal CORQ is not an MB-SH signal (S623, No), the L1 cache controller 16 judges if the core data request signal CORQ is an MB-SH-IV signal (S625). When the core data request signal CORQ is an MB-SH-IV signal (S625, Yes), the L1 cache controller 16 supplies the NO-MB-SH signal to the L2 cache controller 120 (S626). Furthermore, the L1 cache controller 16 changes the status information of the data covered from "E" to "S" (S628), then performs the operation illustrated at S631 explained later.

When the core data request signal CORQ is not the MB-SH-IV signal (S625 No), the L1 cache controller 16 supplies the NO-MB-IV signal to the L2 cache controller 120 (S627). Furthermore, the L1 cache controller 16 changes the status information of the data covered from "E" to "I" (S630). Further, the L2 cache controller performs the operation illustrated at S631 explained later.

When receiving an NO-MB-IV signal or NO-MB-SH signal, the L2 cache controller 120 supplies the data covered held at the L2 cache RAM to the requesting processor core (S631), whereupon the processing is ended.

When the status information is "M" (S622, No), the L1 cache controller 16 judges if the core data request signal CORQ is the MB-SH signal (S651). When the core data request signal CORQ is the MB-SH signal (S651, Yes), the L1 cache controller 16 supplies the MB-SH signal and the data covered stored in the L1 cache RAM to the L2 cache controller 120 (S652). Furthermore, the L1 cache controller 16 converts the status information of data covered from "M" to "S" (S653).

When the core data request signal CORQ is not the MB-SH signal (S651, No), the L1 cache controller 16 judges if the core data request signal CORQ is the MB-SH-IV signal (S654). When the core data request signal CORQ is the MB-SH-IV signal (S654, Yes), the L1 cache controller 16 supplies the MB-IV signal and the data covered held by the L1 cache RAM to the L2 cache controller 120 (S655) as the core data response signal CORS. Furthermore, the L1 cache controller 16 changes the status information of the data covered from "M" to "I" (S656).

When the core data request signal CORQ is not the MB-SH-IV signal (S654 No), the L1 cache controller 16 supplies the MB-IV signal and the data covered held by the L1 cache RAM to the L2 cache controller (S657) as the core data response signal CORS. Furthermore, the L1 cache controller 16 changes the status information of the data covered from "M" to "I" (S656).

When receiving revised data covered and the MB-IV signal or MB-SH signal, the L2 cache controller 120 supplies the revised data covered to the requesting processor core (S657), whereupon the processing is ended.

All examples and conditional language recited herein after intended for pedagogical purposes to aid the reader in understanding the principles of the invention and the concepts contributed by the inventor to furthering the art, and are to be construed as being without limitation to such specifically recited examples and conditions, nor does the organization of such examples in the specification relate to a illustrating of the superiority and inferiority of the invention. Although the embodiments of the present inventions have been described in detail, it should be understood that the various changes, substitutions, and alterations could be made hereto without departing from the spirit and scope of the invention.

## Claims

1. A processor comprising:
a first processing unit that has a first memory unit and performs processing;
a second processing unit that performs processing;
a second memory unit that includes all of the data held by the first memory unit and that holds status information specifying a status of data held in the first memory unit; and
a control unit that outputs a request for reading out data of a first address to the first processing unit and that allows the second processing unit to access data of the first address included at the second memory unit upon receiving a no-data-modification notification indicating the data of the first address is not modified by the first processing unit, when the control unit receives a first access request for data of a first address from the second processing unit when first status information of the data of the first address indicates that the data of the first address is held in the first memory unit in an exclusive state or an owned state.

2. The processor according to claim 1, wherein
the first memory unit holds second status information specifying a status of data held in the first memory unit, and the outputted request requests invalidation of the second status information held in the first memory unit in addition to requesting read out of data of the first address when the first access request requests the second processing unit to modify the data of the first address after the second processing unit reads out data of the first address.

3. The processor according to claim 2, wherein
the second processing unit further comprising a third memory unit, and
the control unit outputs a response requesting to make third status information specifying the status of data of the first address held in the third memory unit to be "exclusive" to the second processing unit after reading out data of the first address from the first processing unit.

4. The processor according to claim 2 or 3, further comprising:
a common signal wire that transmits input and output data between the control unit and the first processing unit or between the control unit and the second processing unit;
a selection circuit that selects input and output data with respect to the first processing unit or input and output data with respect to the second processing unit and outputs the selected data to the common signal wire; and
a memory circuit that stores data not selected by the selection circuit.

5. A control method of a processor including a first processing unit that has a first memory unit and performs processing, a second processing unit that performs processing, a second memory unit that includes all of the data held by the first memory unit and that holds status information specifying a status of data held in the first memory unit, the control method comprising:
receiving a first access request for data of a first address from the second processing unit;
outputting a request for reading out data of a first address to the first processing unit when first status information of the data of the first address indicates that the data of the first address is held in the first memory unit in an exclusive state or owned state; and
allowing the second processing unit to access data of the first address included at the second memory unit upon receiving a no-data-modification notification indicating the data of the first address is not modified by the first processing unit.

6. The control method of a processor according to claim 5, wherein
the first memory unit holds second status information specifying a status of data held in the first memory unit, and
the outputted request requests invalidation of the second status information held in the first memory unit in addition to requesting read out of data of the first address when the first access request requests the second processing unit to modify the data of the first address after the second processing unit reads out data of the first address.

7. The control method of a processor according to claim 6, further outputting:
a response requesting to make third status information specifying the status of data of the first address held in the third memory unit to be "exclusive" to the second processing unit after reading out data of the first address from the first processing unit.
